# EUROPEAN PATENT APPLICATION

(11) **EP 3 267 376 A1**
(43) Date of publication of application: **10.01.2018**
(21) Application number: 17177847.5
(22) Date of filing: 26.06.2017
(51) Int. Cl.: G06Q 10/06

(54) **COMPUTER-IMPLEMENTED SYSTEM AND METHOD FOR PROVIDING CONTEXTUALLY RELEVANT SERVICING**

(30) Priority: 06.07.2016 US 201615203752
(71) Applicant: Palo Alto Research Center, Incorporated, Palo Alto, CA 94304 (US)
(72) Inventor: ROBERTS, Michael, Los Gatos, CA California 95033 (US); AHERN, Shane, Foster City, CA California 94404 (US); GUNNING, David, Seatlle, WA Washington 98199 (US)
(74) Representative: Gill Jennings & Every LLP

(57) **Abstract**

A computer-implemented system and method for providing contextually relevant servicing is provided. A request for servicing is received via a call center and assigned to a user. A context of the user is tracked via sensors that are associated with the user. An activity performed by the user during the servicing is determined based on the context, and one or more recommendations relevant to the identified activity are provided to the user.

## Description

### Field

This application relates in general to monitoring context, and in particular to a computer-implemented system and method for providing contextually relevant servicing.

### Background

With the increased use of mobile computing devices, such as smart phones and tablets, many companies are looking for ways to improve customer satisfaction and experience by incorporating mobile device usage with their business model. Specifically, mobile devices are able to collect useful information about the users and the users' surroundings, which can be utilized in multiple ways to improve the user experience, such as by improving and optimizing business processes and servicing through automating processes.

For example, Uber Technologies Inc., of San Francisco, California, uses the transfer of money via mobile devices to optimize movement of people. Uber users schedule a ride via their mobile devices and each ride is assigned to an Uber driver. Each Uber driver is paid based on a number of rides conducted, so most drivers want to be able to transport passengers as fast as possible to increase the total number of passengers transported, which in turn increases the efficiency of travel and satisfaction of the passengers. However, Uber fails to consider or track the actions of passengers and drivers to further optimize their service, such as by anticipating a need of a driver or passenger and then fulfilling the need.

Further, other businesses, such as cable companies, assign service tickets to drivers based on an availability of the driver regardless of whether the driver is in the vicinity of the ticket or without consideration of whether the driver has the correct parts to make the proper repairs. Therefore, clients of the cable companies must wait while the drivers move perhaps from one end of town to the other or while another driver brings the proper parts for repair. Therefore, such companies fail to anticipate a need of their drivers to provide efficient and complete servicing, which may result in dissatisfaction and frustration of a company's clients.

Therefore, there is a need for an approach to tracking and identifying user activity and context to optimize business offerings, including predicting needs of the user and providing timely information and resources to fulfill the user need. Preferably, the context-based service optimization will increase user efficiency and the reduce cost of a provided service.

### Summary

To optimize business servicing, contextual information of a user is collected and processed to determine the contextual surrounding of a user, including an activity performed by the user while attempting to fulfill a service request. Based on the identified activity, one or more recommendations to assist the user with the activity are identified from a set of activity models and provided to the user. The recommendations can include information and resources to assist the user with completing the service request.

An embodiment provides a computer-implemented system and method for providing contextually relevant servicing. A request for servicing is received via a call center and assigned to a user. A context of the user is tracked via sensors that are associated with the user. An activity performed by the user during the servicing is determined based on the context, and one or more recommendations relevant to the identified activity are provided to the user.

Still other embodiments of the present invention will become readily apparent to those skilled in the art from the following detailed description, wherein is described embodiments of the invention by way of illustrating the best mode contemplated for carrying out the invention. As will be realized, the invention is capable of other and different embodiments and its several details are capable of modifications in various obvious respects, all without departing from the spirit and the scope of the present invention. Accordingly, the drawings and detailed description are to be regarded as illustrative in nature and not as restrictive.

### Brief Description of the Drawings

FIGURE 1 is a block diagram showing a computer-implemented system for providing contextually relevant servicing, in accordance with one embodiment.
FIGURE 2 is a flow diagram showing a computer-implemented method for providing contextually relevant servicing, in accordance with one embodiment.
FIGURE 3 is a flow diagram showing, by way of example, a process for determining a user activity.
FIGURE 4 is a flow diagram showing, by way of example, a process for identifying recommendations.
FIGURE 5 is a flow diagram showing, by way of example, a process for providing remote assistance.

### Detailed Description

In the increasingly competitive marketplace today, companies are focusing on different ways to increase business efficiency and customer satisfaction to maintain or gain an advantage over their competitors. Based on the expanding use of mobile devices, many of these companies are attempting to offer services or processes that incorporate mobile devices. However, these new services can be better optimized by considering a user's context to anticipate or identify a need for fulfilment. Context-based service optimization can be implemented to provide timely information and resources when needed.

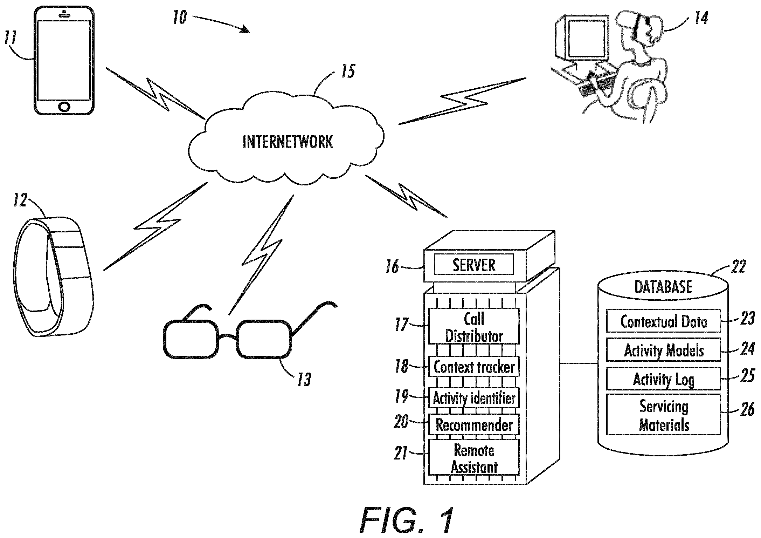

Anticipating the needs of a user can increase the efficiency of business servicing, which may result in higher customer satisfaction. FIGURE 1 is a block diagram showing a computer-implemented system 10 for providing contextually relevant servicing, in accordance with one embodiment. A customer (not shown) submits a request for a service. The service can be dependent on the type of company to which the request is submitted, such as repair companies, cable companies, cell phone companies, ride-sharing businesses, and stores, as well as other businesses.

The request can be received by a call center 14 via voice, text messaging, or email, as well as via other communication methods. Once received, the request can be transmitted to a server 14 for distribution to a service provider via a call distributor 17 or alternately, the request can be transmitted to a standalone automatic call distributor (not shown). The server 16 can be remotely located from the call center and accessible via an internetwork 15, such as the Internet, or can be stored locally within the call center. Further, the server 16 can include the call distributor 17, a context tracker 18, an activity identifier 19, a recommender 20, and a remote assistant 21.

The service provider or user, to whom the request is assigned, can be associated with one or more computing devices, including a smartphone 11, a smart watch 12, and a head-mounted computing device 13, such as Google Glass manufactured by Google Inc. Hereinafter, the terms "service provider" and "user" are used interchangeably with the same intended meaning, unless otherwise indicated. Each of the computing devices can collect contextual data 23 for the service provider, including one or more of location, acceleration, movement tracking, inventory, and other types of data related to the user's current surroundings. The contextual data 23 can be collected via sensors within the computing devices or via sound or video recording.

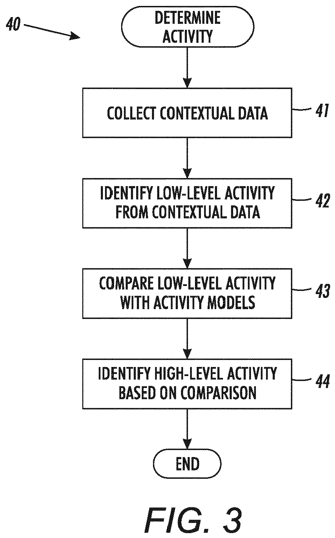

Once collected, the contextual data 23 can be separately transmitted to the context tracker 18 by each computing device for storing in a database 27 interconnected to the server 16. Also, the activity identifier 19 accesses the data 23 to identify one or more activities of the user currently being performed. In one embodiment, the activities can be identified using a combination of activity recognition and semantic modeling. Specifically, low level activities can be determined directly from the context data itself, while high level activities can be identified using activity models based on one or more of the low level activities. Identifying activities is further described in detail with reference to FIGURE 3. Once identified, the activities of the user can be stored in the database 22 in an activity log 25.

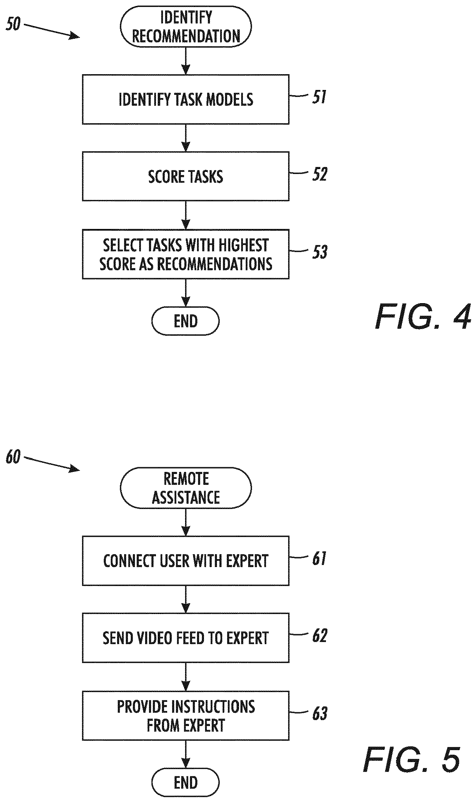

Subsequently, the recommender 20 can anticipate a need of the user prior to or during fulfillment of the request based on the identified user activities and to identify one or more recommendations for providing to the user for completing the assigned request. Upon determination, the recommendations can be sent to the user for selection and performance. The recommendations can each include one or more tasks for performance by the service provider. Each task can be accompanied by servicing material 26, such as specifications, manuals, training material, or authored procedures for completing at least a part of a specific request. The servicing material can be stored in and accessed from the database 22. Further, as part of or in addition to the recommendations, the remote assistant 21 allows users to receive real-time assistance from experts and perform known procedures for resolving problems step-by-step. Remote assistance is further described below in detail with respect to FIGURE 5.

The mobile computing devices and server can each include one or more modules for carrying out the embodiments disclosed herein. The modules can be implemented as a computer program or procedure written as source code in a conventional programming language and is presented for execution by the central processing unit as object or byte code. Alternatively, the modules could also be implemented in hardware, either as integrated circuitry or burned into read-only memory components, and each of the client and server can act as a specialized computer. For instance, when the modules are implemented as hardware, that particular hardware is specialized to perform the data quality assessment and other computers cannot be used. Additionally, when the modules are burned into read-only memory components, the computer storing the read-only memory becomes specialized to perform the data quality assessment that other computers cannot. The various implementations of the source code and object and byte codes can be held on a computer-readable storage medium, such as a floppy disk, hard drive, digital video disk (DVD), random access memory (RAM), read-only memory (ROM) and similar storage mediums. Other types of modules and module functions are possible, as well as other physical hardware components.

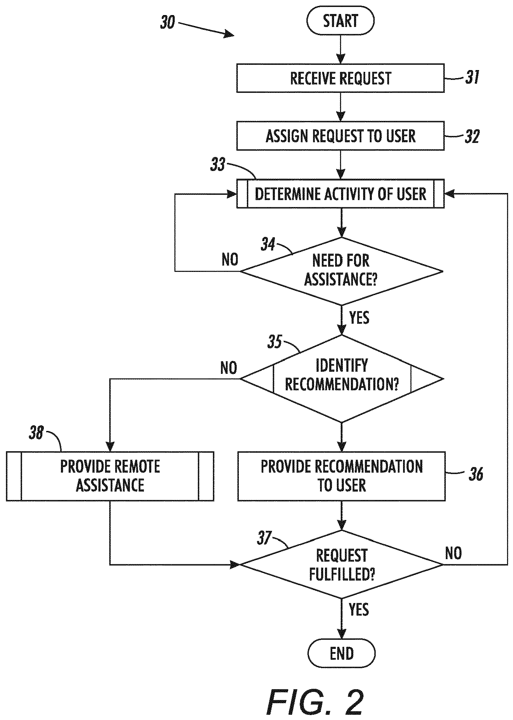

Anticipating a need of a service provider while servicing a customer request can increase the efficiency of a business by providing the service provider with advice. FIGURE 2 is a flow diagram showing a computer-implemented method 30 for providing contextually relevant servicing, in accordance with one embodiment. A customer requiring servicing submits (block 31) a request to a call center of an organization via a telephone call, Instant Messaging, SMS text messaging, or email and the request is distributed (block 32) to a service provider. The request can include a service to be performed along with the customer's name, address, and customer number. Other data items for inclusion in the request are possible.

The organization can be a company providing the servicing or a company that merely organizes and dispatches service provides to conduct the servicing. For example, a cable company, providing repair servicing, maintains a call center in which repair requests are received and distributed to a service provider who is an employee of the cable company. Alternatively, two or more separate cable companies or companies with different service offerings can subscribe to the context-based service optimization which maintains a call center to assign incoming requests to service providers associated with the context-based service optimization, rather than employees of the companies.

The service provider to whom the request is assigned can be selected based on availability, location, experience, or request by the customer. Other factors for assigning a request to the service provider are possible. A context of the service provider is determined by collecting contextual data and identifying one or more activities being performed (block 33) based on the contextual data. The contextual tracking of the service provider can occur on a continuous basis, at predetermined times, or randomly. Identifying user activities based on the contextual data is further described below in detail with reference to FIGURE 3.

Once identified, the user activities can be used to determine or anticipate (block 34) a need for assistance by the service provider. If no need for helpful exists, further activities of the user are monitored (block 33) to determine if and when assistance can be provided. However, if help or advice would be necessary or useful to the service provide, one or more recommendations can be identified (block 35) and provided (block 36). The recommendations can each be selected based on identifying tasks commonly performed with one or more activities by prior users, which are similar to the service provider's activities. Selecting recommendations is further described below in detail with reference to FIGURE 4. However, if no recommendations can be identified to fulfill the users need, remote assistance (block 38) can be provided via initiating communication with a knowledgeable individual. Remote assistance is further described below with respect to FIGURE 5.

Upon providing a recommendation or remote assistance, a determination is made as to whether the service provider has completed (block 37) the service request. If so, then the context-based service optimization ends until the service provider is assigned another request. Alternatively, a context of the service provider continues to be monitored until the service provider's shift ends. However, if the request has not yet been fulfilled, the context of the service provider continues to be tracked to determine whether further assistance can be provided.

In a further embodiment, context tracking of one or more service providers can be performed prior to assignment of the request to determine which service provider is the best candidate for receiving the request. For instance, returning to the above-identified example, the service request submitted to the cable company includes installation of a new modem and cable box. A context of all clocked-in service providers at the time of the request are tracked and activities of each service provider can be determined. Based on the contextual data and activities, a determination is made as to the best service provider for assigning the request. The best service provider may be the individual that has a modem and cable box stocked on his truck or a service provider that is available, but may first need to pick up the modem and cable box from another service provider.

Determining and tracking a user's activities helps anticipate any need of the user in real-time for providing immediate assistance and resolution. Identifying such activities can be performed based on data collected about the user's surroundings. FIGURE 3 is a flow diagram showing, by way of example, a process 40 for determining a user activity. Contextual data is collected (block 41) from sensors encompassed by mobile computing devices associated with the user. The mobile devices can include one or more of a smart phone, smart watch, and head-mounted computing device, as well as other types of mobile computing devices. Each of the mobile devices can include multiple sensors to measure contextual data, including speed, location, acceleration, physical movement, eye gaze, object presence, inventory, scenery, and traffic, as well as other types of data. Further, video and sound data can be recorded for use with the contextual data.

One or more low-level activities being performed by the user can be identified (block 42) directly from the contextual data. Each low-level activity describes a raw action being performed by the user. For instance, if an accelerometer provides a reading of zero, then the user is determined to be still and not accelerating or moving to a different location. However, a different sensor may identify movement of the user by the pressing of a button on one of the mobile devices. The low-level activities are then compared (block 43) with a set of activity models to determine (block 44) a high-level activity of the model. A high-level activity describes a specific action being performed by the user based on the raw actions detected. For instance, returning to the example above, the user is determined to be still, but moving with respect to the mobile device button selection, which may indicate some sort of work being conducted on the mobile device. Combined with data for tracking computer use, the user activity is determined to be pressing send on an email.

In one embodiment, each high-level activity can be stored as a model that includes one or more raw actions to identify that specific high-level activity. Those the models that most closely resemble the detected raw actions of the user are identified and selected as the high-level activity identified as being performed by the user. Each activity model can be focused on the specific user based on actions performed by that user over time, as well as on background information regarding the user's job title and skill set. Alternatively, the activity models can be based on a population of users with the same or similar job titles and skills as the user. In one embodiment, the low-level activities can each be detected by the mobile devices associated with the user, while the high-level activities can be determined by a remote server using the activity models.

In a further embodiment, distributed activity detection can be used to identify activities performed by the user. Distributed activity detection helps offset some of the processing typically required by a server and can result in faster and more accurate identification of an activity using high frequency data. First, contextual data is collected for a user via one or more mobile computing devices. Features are extracted from the data to generate a feature vector. The feature vector is then compared with one or more activity models stored on at least one of the mobile computing devices and a similarity measure is determined for each model. If one of the models satisfies a predefined amount of similarity to the feature vector, an identification label for the activity associated with that model is assigned to the feature vector. However, if none of the models satisfy the similarity, the user is requested to assign an activity label to the activity represented by the feature vector and the activity label is transmitted to a server with the feature vector for training a new model. Once trained, the server transmits the new model to the mobile computing device for running. Distributed activity detection is described in further detail in commonly-owned U.S. Patent Application, Serial No. 15/203764, entitled "Computer-Implemented System and Method for Distributed Activity Detection," Docket No. 20150448US01, filed on July 6, 2016, pending, the disclosure of which is incorporated by reference.

Once an activity being performed by the service provider is identified, a recommendation can be provided to assist with the activity being performed during fulfillment of a customer request. One or more recommendations can be identified by looking at all possible tasks that can be performed to make completing the activity easier or faster. FIGURE 4 is a flow diagram showing, by way of example, a process 50 for identifying recommendations. A set of task models is identified (block 51). Each task model is represented by a high-level activity with multiple tasks frequently performed or recommended to be performed prior to, during, or after the high-level activity. For example, tasks associated with the activity of installing a modem can include providing a set of directions for reading by the user, reminding the service provider to uninstall any drivers associated with the customer's old modem, and asking the service provider to obtain the operating system used by the customer. In one embodiment, the task models can be used to train a machine for machine learning. Once trained, the identified activities of a user are input into the machine to score (block 52) the tasks based on the identified user activities and based on prior tasks of the user when performing a similar activity. Scoring of the tasks can be performed using a mixed-model recommender as described in commonly-owned U.S. Patent Application Publication No. 2009/0077057, to Ducheneaut et al., pending, published on March 19, 2009. Subsequently, the highest scored tasks are then selected (block 53) for providing to the service provider as recommendations.

Once received, the service provider can select one or more of the tasks for performance. The tasks can include providing advice, electronic manuals, forums and information, suggestions, and contact information, which can then be acted upon by the service provider. In one embodiment, a task can also include enabling direct access to remote expertise, such as from other service providers, domain experts, and management. FIGURE 5 is a flow diagram showing, by way of example, a process 60 for providing remote assistance. Remote assistance connects (block 61) a service provider with individuals having a higher level of knowledge regarding completing and fulfilling a request. Once connected, video or sound data collected from one or more of the mobile computing device associated with the service provider is transmitted (block 62) in real-time to one or more individuals for providing assistance. Based on the information provided in the video or sound data, the assisting individual can provide (block 63) feedback, advice, or instructions to the service provider. In one embodiment, the remote assistance can be performed as described in commonly-owned U.S. Patent Application Publication No. 2013/0325970, to Roberts et al., pending, published on December 5, 2013. Additionally, remote assistance can be offered as a recommended task or alternately, may only be available to a service provider if the service provider is still unable to fulfill a request after performing one or more of the recommended tasks.

Qualified real life assistance can also be provided to a service provider or other individuals in addition to or in lieu of providing recommendations or remote assistance, as described in further detail in commonly-owned U.S. Patent Application, Serial No. 15/203727, entitled "Computer-Implemented System and Method for Providing Contextually Relevant Task Recommendations to Qualified Users," Docket No. 20141585US01, filed on July 6, 2016, pending, the disclosure of which is incorporated by reference. Specifically, upon identification of a user's context, including an action performed by that user, a recommendation can optionally be provided to the user and one or more qualified individuals are notified of the context with a request to assist the user. For instance, a user is identified as performing protein purification in which a hazardous chemical is used. The user is continually monitored throughout the purification process and further activities of the user are identified, including the user spilling the hazardous chemical. Based on the spill action, a recommendation is provided to the user to leave the room without cleaning the spill since the user is not experienced in cleaning chemical spills. Further, a group of individuals with knowledge and experience regarding proper chemical cleaning are identified and notified of the spill. One or more of the individuals can offer to or be selected to clean the spill.

Further, once the activity is identified, a predicted outcome of the activity can be determined, as described in detail in commonly-owned U.S. Patent Application, Serial No. 15/203740, entitled "Computer-Implemented System and Method for Predicting Activity Outcome Based on User Attention," Docket No. 20141587US01, filed on July 6, 2016, pending, the disclosure of which is incorporated by reference. For example, upon identifying an activity performed by a service provider, a connection between the service provider and a remote expert is made such that the remote expert can provide assistance to the service provider. During this connection, actions of the service provider are monitored to determine the service provider's subject of focus. Based on the determined focus subject, an outcome for completion of the service is determined and further assistance, if necessary, can be provided to the service provider based on the predicted outcome.

Although the context-based service optimization has been described above with respect to a cable company, services offered by other businesses can be optimized using the context-based service optimization, such as in the travel, medical and dental, car rental and repair, legal, and law enforcement industries, as well as in other industries.

In a further embodiment, a hybrid distributed billing and payment system can be implemented with the context-based service optimization. Users, or service providers, could be paid a basic salary, which could be supplemented with per-incident payments according to predetermined metrics, such as time-on-task or whether a repeat request was made after a service provider answered an initial request. Other billing and payment options are possible, such as only paying the service providers based on per-incident payments.

In yet a further embodiment, parts tracking can be performed. The parts tracking allows users to find and procure machine or service parts from other locations, such as from other users or warehouses. Further, vehicles or drones can be utilized to rapidly move the parts between users and locations, with location and delivery optimized by the context-based service optimization. In one example, the needed parts can be determined by mining prior service records and then ensuring that the parts are distributed to the correct locations.

While the invention has been particularly shown and described as referenced to the embodiments thereof, those skilled in the art will understand that the foregoing and other changes in form and detail may be made therein without departing from the spirit and scope of the invention.

## Claims

1. A computer-implemented system for providing contextually relevant servicing, comprising:
a request for servicing; and
a server comprising a central processing unit, an input port to receive the request, and an output port, wherein the central processing unit is configured to:
assign the request to a user;
track a context of the user through sensors associated with the user;
identify an activity of the user during the servicing based on the context; and
provide to the user one or more recommendations relevant to the identified activity.

2. A system according to Claim 1, wherein the central processing unit is further configured to:
receive from the user a selection of at least one of the recommendations.

3. A system according to Claim 2, wherein the central processing unit is further configured to:
identify one or more materials relevant to the user selected recommendation; and
provide the materials to the user.

4. A system according to Claim 3, wherein the materials comprise at least one of a manual, book, diagram, instruction set, and picture.

5. A system according to Claim 1, wherein the central processing unit is further configured to:
determine the activity of the user by accessing one or more context models each associated with an activity, comparing the context of the user with the context models, and selecting the activity associated with one or more of the context models most similar to the user context.

6. A computer-implemented method for providing contextually relevant servicing, comprising:
receiving a request for servicing via a call center;
assigning the request to a user;
tracking a context of the user through sensors associated with the user;
identifying an activity of the user during the servicing based on the context; and
providing to the user one or more recommendations relevant to the identified activity.

7. A method according to Claim 6, further comprising:
receiving from the user a selection of at least one of the recommendations.

8. A method according to Claim 7, further comprising:
identifying one or more materials relevant to the user selected recommendation; and
providing the materials to the user.

9. A method according to Claim 8, wherein the materials comprise at least one of a manual, book, diagram, instruction set, and picture.

10. A method according to Claim 6, further comprising:
determining the activity of the user, comprising:
accessing one or more context models each associated with an activity;
comparing the context of the user with the context models; and
selecting the activity associated with one or more of the context models most similar to the user context.
